# EUROPÄISCHE PATENTANMELDUNG

(11) **EP 1 632 697 A2**
(43) Veröffentlichungstag der Anmeldung: **08.03.2006**
(21) Anmeldenummer: 05014603.4
(22) Anmeldetag: 06.07.2005
(51) Int. Cl.: F16H 61/28

(54) **Kennlinie für die Servounterstützungseinrichtung einer Schaltvorrichtung**

(30) Priorität: 03.09.2004 DE 102004042609
(71) Anmelder: ZF FRIEDRICHSHAFEN AG, 88038 Friedrichshafen (DE)
(72) Erfinder: Fischer, Dieter, 88149 Nonnenhorn (DE); Späth, Klaus, 88276 Berg (DE)

(57) **Zusammenfassung**

Es wird eine Kennlinie für die Servounterstützungseinrichtung einer Schaltvorrichtung eines Kraftfahrzeuggetriebes vorgeschlagen, welche abhängig von der Handschaltkraft bzw. der Schaltungsphase Bereiche mit unterschiedlicher Steigung bzw. Proportionalität zur Handschaltkraft aufweist.

## Beschreibung

Die vorliegende Erfindung betrifft eine Kennlinie für eine Servounterstützungseinrichtung einer Schaltvorrichtung eines Kraftfahrzeuggetriebes gemäß dem Oberbegriff des Patentanspruchs 1.

Aus dem Stand der Technik sind Schaltvorrichtungen für Getriebe bekannt, die Servounterstützungseinrichtungen umfassen, welche den Fahrer bei der manuellen Schaltung unterstützen.

Hierbei kann es sich um Getriebe, umfassend ein manuell vom Fahrer an einem Handschalthebel schaltbares Hauptgetriebeteil, ein über Ventile pneumatisch schaltbares Splitgruppengetriebe und ein über Ventile pneumatisch schaltbares Bereichsgruppengetriebe handeln, oder um mehrgängige Getriebe ohne Splitgruppengetriebe und Bereichsgruppengetriebe, wie z.B. ein Sechs-Gang-Getriebe sowie ein Getriebe mit einem Splitgruppengetriebe.

Die Ventilkennlinien der Betätigungskolben der Servounterstützungseinrichtungen stellen üblicherweise einen Kompromiss zwischen Schaltkomfort und Synchronbelastung dar, wie beispielsweise die im Rahmen der DE 195 39 472 A1 der Anmelderin vorgegebene Kennlinie, welche in einer unterstützenden Schaltkraft resultiert, die der in die Schaltvorrichtung eingeleiteten Handschaltkraft stets über denselben Faktor proportional ist bzw. die gleiche Steigung aufweist.

Dies kann in nachteiliger Weise dazu führen, dass beispielsweise zu Beginn der Schaltung, wenn bedingt durch Reibungseinflüsse in der Schaltanlage oder im Getriebe der Gesamtwirkungsgrad schlecht ist, die Servounterstützung nicht ausreichend ist. Eine steilere Kennlinie würde zwar eine ausreichende Unterstützungskraft in dieser Phase liefern, die aber während des anschließenden Synchronvorgangs die Synchronisierungen überlasten würde.

Der vorliegenden Erfindung liegt die Aufgabe zugrunde, eine Kennlinie für die Servounterstützungseinrichtung einer Schaltvorrichtung eines Kraftfahrzeuggetriebes anzugeben, durch die die genannten Nachteile des Standes der Technik vermieden werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird vorgeschlagen, die Kennlinie für die Servounterstützungseinrichtung einer Schaltvorrichtung eines Kraftfahrzeuggetriebes so auszuführen, dass diese abhängig von der Handschaltkraft bzw. der Schaltungsphase Bereiche mit unterschiedlicher Steigung bzw. Proportionalität zur Handschaltkraft aufweisen. Vorzugsweise weist eine erfindungsgemäße Kennlinie zunächst eine große Steilheit auf und geht dann ab einem bestimmten Punkt (Knickpunkt) in eine Kennlinie über, welche die Synchronisierung nicht überlastet und dementsprechend weniger steil als zu Beginn der Schaltung verläuft.

Hierbei sind Auslösekraft, Knickpunkt und Steilheit der Kennlinie bzw. die Aufteilung der Bereiche unterschiedlicher Steigung von der konstruktiven Ausführung der Servounterstützungseinrichtung abhängig.

Gemäß der Erfindung ist es möglich, dass die Kennlinie mehr als einen Knickpunkt bzw. mehr als zwei Bereiche unterschiedlicher Steigung aufweist; so kann die Kennlinie nach dem ersten Knickpunkt einen flachen, konstanten Verlauf aufweisen, um ab einem zweiten Knickpunkt in eine weniger steile Kennlinie überzugehen.

Die Erfindung wird im Folgenden anhand der beigefügten Figuren beispielhaft näher erläutert. Es stellen dar:
- Fig. 1: den Verlauf einer ersten Kennlinie gemäß der Erfindung im Vergleich zu einer Kennlinie nach dem Stand der Technik; und
- Fig. 2: den Verlauf einer zweiten Kennlinie gemäß der Erfindung im Vergleich zu einer Kennlinie nach dem Stand der Technik.

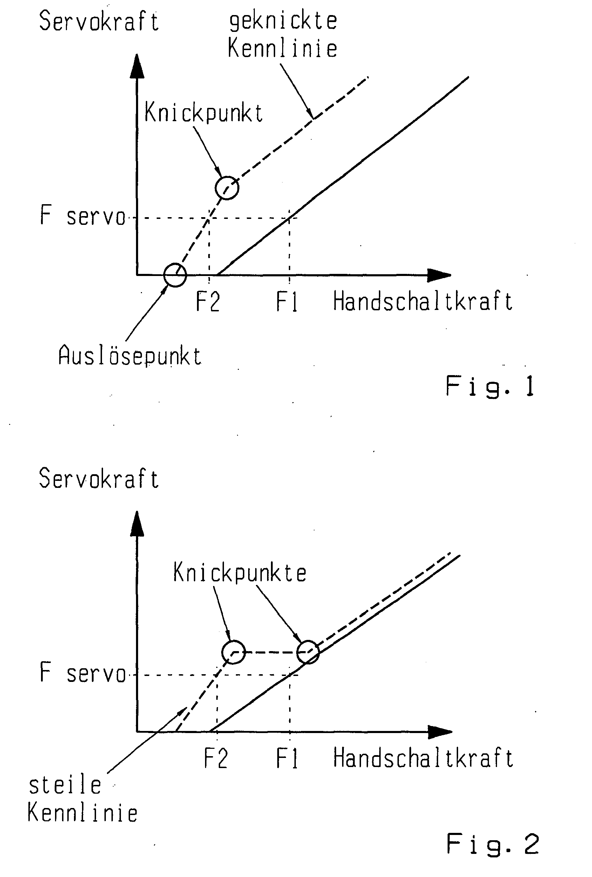

In den Fig. 1 und 2 wird die Servokraft als Funktion der Handschaltkraft dargestellt. Die durchgezogene Linie entspricht der aus dem Stand der Technik bekannten Kennlinie, bei der die Servokraft über den gesamten Kennlinienbereich die gleiche Steigung aufweist.

Die in den Fig. 1 und 2 gestrichelt dargestellten Kennlinien gemäß der Erfindung resultieren in einer größeren Servounterstützungskraft zu Beginn der Schaltung. Wie aus den Figuren ersichtlich, wird bei der Kennlinie nach dem Stand der Technik eine deutlich größere Handschaltkraft F1 benötigt, um eine bestimmte Servokraft F_servo zu realisieren, als dieses mit den erfindungsgemäßen, zu Beginn der Schaltung steileren Kennlinien der Fall ist, bei denen eine geringe Handschaltkraft F1 benötigt wird.

Die in Fig. 1 dargestellte erfindungsgemäße Kennlinie weist einen Knickpunkt auf, ab dem der Verlauf weniger steil ist, um die an der Schaltung beteiligten Bauteile zu schonen. Bei der in Fig. 2 dargestellten Kennlinie ist nach dem ersten Bereich zu Beginn der Schaltung, bei dem die Steigung groß ist, ein Abschnitt mit einem konstanten Verlauf vorgesehen, der dann ab einem zweiten Knickpunkt in etwa in die Kennlinie gemäß dem Stand der Technik übergeht.

Durch die erfindungsgemäße Konzeption wird eine ausreichende Servounterstützung zu Beginn der Schaltung gewährleistet, wobei während der Synchronphase eine Unterstützungskraft erzeugt wird, welche die an der Schaltung beteiligten Bauteile bzw. die Synchronisierungen nicht überlastet.

## Patentansprüche

1. Kennlinie für die Servounterstützungseinrichtung einer Schaltvorrichtung eines Kraftfahrzeuggetriebes, **dadurch gekennzeichnet, dass** diese abhängig von der Handschaltkraft bzw. der Schaltungsphase Bereiche mit unterschiedlicher Steigung bzw. Proportionalität zur Handschaltkraft aufweist.

2. Kennlinie nach Anspruch 1, **dadurch gekennzeichnet, dass** sie zumindest zwei Bereiche unterschiedlicher Steigung aufweist, wobei zu Beginn einer Schaltung die Steigung größer ist, als die Steigung während der Synchronphase, derart, dass zu Beginn der Schaltung eine ausreichende Servounterstützungskraft zur Verfügung steht, wobei während der Synchronphase eine Überlastung der an der Schaltung beteiligten Bauteile vermieden wird.

3. Kennlinie nach Anspruch 1 oder 2, **dadurch gekennzeichnet, dass** die Auslösekraft und die Aufteilung der Bereiche unterschiedlicher Steigung der Kennlinie von der konstruktiven Ausführung der Servounterstützungseinrichtung abhängig sind.
